Europäisches Patentamt

European Patent Office

Office européen des brevets

(11) Numéro de publication: **0 268 522**
**A1**

(12) **DEMANDE DE BREVET EUROPEEN**

(21) Numéro de dépôt: 87402474.8

(22) Date de dépôt: 03.11.87

(51) Int. Cl.⁴: **G 02 F 1/133**
**G 09 G 3/36**

(30) Priorité: 05.11.86 FR 8615411

(43) Date de publication de la demande:
25.05.88 Bulletin 88/21

(84) Etats contractants désignés:
**CH DE GB IT LI NL**

(71) Demandeur: **COMMISSARIAT A L'ENERGIE ATOMIQUE**
**31/33, rue de la Fédération**
**F-75015 Paris (FR)**

(72) Inventeur: **Leroux, Thierry**
**13, Mail Marcel Cachin**
**F-38600 Fontaine (FR)**

**Truche, Robert**
**11, rue Wilson**
**F-38610 Gieres (FR)**

(74) Mandataire: **Mongrédien, André et al**
**c/o BREVATOME 25, rue de Ponthieu**
**F-75008 Paris (FR)**

(54) Dispositif d'affichage matriciel et procédé de commande de ce dispositif.

(57) L'invention concerne un dispositif d'affichage matriciel et son procédé de commande.

Ce dispositif comprend un matériau d'affichage possédant une propriété optique intercalée entre deux parois isolantes. Sur la face interne de l'une des parois (1) sont disposés n conducteurs lignes, m conducteurs colonnes, p conducteurs résistifs et p.k électrodes regroupées en p = m.(n-1) paquets de k électrodes chacun ; les électrodes $E_1,... E_k$ d'un paquet $P_{ii'j}$ sont reliées par des interrupteurs $I_1,... I_k$ à un conducteur colonne $C_j$ et à un conducteur résistif $R_{ii'j}$, lui-même connecté entre deux conducteurs lignes $L_i$ et $L_{i'}$, avec i, i' et j entiers tels que $i \neq i'$, $1 \leq i \leq n$, $1 \leq i' \leq n$ et $1 \leq j \leq m$. Par ailleurs, sur la face interne de l'autre paroi est disposée une contre-électrode.

L'invention s'applique particulièrement bien aux dispositifs d'affichage à cristaux liquides.

FIG. 2

EP 0 268 522 A1

## Description

### DISPOSITIF D'AFFICHAGE MATRICIEL ET PROCEDE DE COMMANDE DE CE DISPOSITIF

La présente invention concerne un dispositif d'affichage matriciel ainsi que le procédé de commande de ce dispositif.

L'invention s'applique en optoélectronique et principalement dans les dispositifs d'affichage à cristal liquide, utilisés notamment comme convertisseurs d'information électrique en information optique, dans le traitement des images optiques en temps réel et dans l'affichage analogique.

De façon plus précise, l'invention concerne un dispositif d'affichage à matrice active comprenant un matériau d'affichage possédant une propriété optique. La propriété optique du matériau d'affichage est par exemple une opacité, un indice de réfraction, une transparence, une absorption, une diffusion, une diffraction, une convergence, etc.. Par ailleurs, ce matériau peut être un corps solide ou liquide, amorphe ou cristallin.

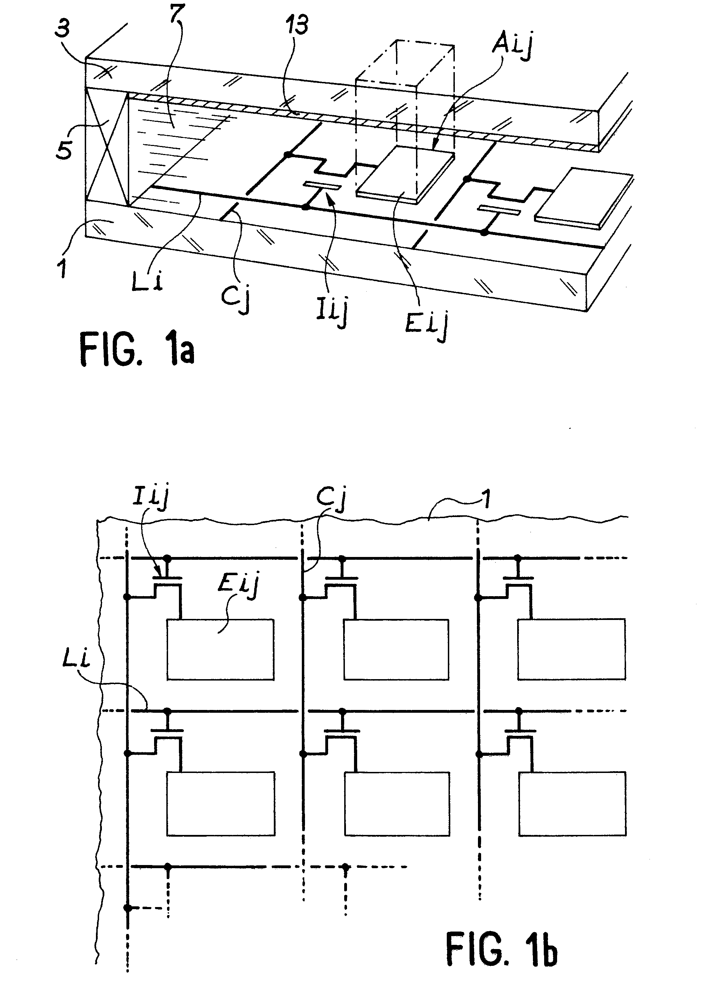

Les figures 1a et 1b représentent schématiquement respectivement une perspective d'un exemple de dispositif d'affichage à matrice active de type connu et la face interne de l'une des parois de ce dispositif.

Sur la figure 1a sont représentées une première et une deuxième parois isolantes 1, 3 en regard l'une de l'autre maintenues écartées et scellées par un joint 5. Entre ces parois est intercalée une couche d'un matériau d'affichage 7 possédant une propriété optique. Ce matériau 7 est par exemple un film de cristal liquide.

Sur la face interne de l'une des parois 1 (figures 1a et 1b) sont répartis n conducteurs lignes parallèles, notés $L_i$, et m conducteurs colonnes parallèles, notés $C_j$, croisés avec les conducteurs lignes, i et j étant des entiers tels que $1 \leq i \leq n$ et $1 \leq j \leq m$ ; ces conducteurs lignes et ces conducteurs colonnes véhiculent des signaux électriques appropriés à l'excitation du matériau d'affichage 7 et générés par des moyens d'adressage non représentés.

Au croisement de chaque conducteur ligne $L_i$ et de chaque conducteur colonne $C_j$ se trouve un interrupteur $I_{ij}$ tel qu'un transistor à effet de champ relié par sa grille au conducteur ligne $L_i$ et indifféremment par sa source et son drain au conducteur colonne $C_j$ et à une électrode $E_{ij}$.

Par ailleurs, la face interne de l'autre paroi 3 est recouverte d'un matériau conducteur servant de contre-électrode 13. Cette contre-électrode est portée à un potentiel de référence.

Un point image $A_{ij}$ est défini par un condensateur formé par l'électrode $E_{ij}$ et la contre-électrode 13, le matériau 7 intercalé entre ces deux électrodes formant le diélectrique du condensateur.

Pour sélectionner un point image $A_{ij}$, on envoie sur le conducteur ligne $L_i$ un signal électrique qui sélectionne l'état passant de l'ensemble des transistors reliés à ce conducteur ligne et en particulier, l'état passant du transistor $I_{ij}$ associé à ce point image. Ce transistor transmet alors à l'électrode $E_{ij}$à laquelle il est relié le signal électrique provenant du conducteur colonne $C_j$. Entre l'électrode $E_{ij}$ et la contre-électrode 13, il apparaît un champ électrique qui va provoquer l'excitation et l'orientation collective des molécules du matériau d'affichage intercalé entre cette électrode $E_{ij}$ et la contre-électrode 13, lorsque le signal provenant de la colonne $C_j$est supérieur ou égal à un potentiel de seuil $V_S$ correspondant à la valeur minimale nécessaire pour exciter le matériau 7. Cette orientation collective va modifier la propriété optique du matériau au point image $A_{ij}$.

En utilisant l'excitation ponctuelle du cristal liquide, on fait apparaître une image sur l'ensemble du dispositif d'affichage en la définissant point par point.

On connaît d'autres types de dispositifs d'affichage à matrice active. Ainsi, par exemple, le document FR-A-2 553 218 décrit un dispositif d'affichage à matrice active comprenant sur la face interne de l'une de ses parois, une matrice d'électrodes reliées par des interrupteurs à des conducteurs lignes et sur la face interne de l'autre paroi, des électrodes colonnes en regard de la matrice d'électrodes et reliées à des conducteurs colonnes, les interrupteurs étant reliés en outre à un potentiel de référence.

Le nombre de points images des dispositifs d'affichage connus est égal au nombre de conducteurs lignes multiplié par le nombre de conducteurs colonnes, autrement dit à n.m. Aussi, toute augmentation du nombre de points images dans un dispositif d'affichage connu entraîne une augmentation du nombre de conducteurs lignes et/ou colonnes et donc une augmentation de la complexité de réalisation du dispositif d'affichage et une augmentation de sa surface inactive. La surface inactive correspond à une surface non occupée par la matrice d'électrodes du dispositif, chaque électrode de cette matrice correspondant à un point image.

L'invention a pour but de remédier à ces inconvénients et notamment de réaliser un dispositif d'affichage à matrice active comportant un nombre de points images supérieur au produit du nombre de conducteurs lignes et du nombre de conducteurs colonnes. L'invention s'applique particulièrement bien à tous les dispositifs d'affichage à matrice active et notamment à ceux décrits précédemment.

De façon plus précise, l'invention a pour objet un dispositif d'affichage matriciel comprenant un matériau d'affichage possédant une propriété optique intercalée entre une première et une deuxième parois isolantes, caractérisé en ce qu'il comprend une matrice de p.k éléments constitués chacun d'un interrupteur et d'un point image défini par un condensateur formé de deux électrodes disposées sur l'une et l'autre des deux parois, n conducteurs lignes, m conducteurs colonnes et p conducteurs résistifs, chaque conducteur résistif $R_{ii'j}$ étant connecté entre deux conducteurs lignes $L_i$, $L_{i'}$, avec p, k, n, m, i, i', j entiers tels que $i \neq i'$, $1 \leq i \leq n$, $1 \leq i' \leq n$, $1 \leq j \leq m$ et $p = m.(n-1)$, les p.k éléments

étant regroupés en p paquets de k éléments chacun, les éléments de chaque paquet étant reliés à un conducteur colonne et à un conducteur résistif, des signaux appropriés à l'excitation du matériau d'affichage étant appliqués aux conducteurs lignes et aux conducteurs colonnes.

Le dispositif d'affichage conforme à l'invention permet d'avoir $k.p = k.m.(n-1)$ points images avec n conducteurs lignes et m conducteurs colonnes au lieu de $m.n$ points images avec les dispositifs d'affichage connus.

Selon un mode de réalisation du dispositif d'affichage de l'invention, sur la face interne de la première paroi sont disposés les n conducteurs lignes, les m conducteurs colonnes, les p conducteurs résistifs, et $p.k$ électrodes regroupées en p paquets de k électrodes chacun, avec p, k, m, n entiers et $p = m(n-1)$, les électrodes $E_1$, ..., $E_k$ d'un paquet $P_{ii'j}$ étant reliées repectivement par des interrupteurs $I_1$, ..., $I_k$ à un conducteur colonne $C_j$ et à un conducteur résistif $R_{ii'j}$ lui-même connecté entre deux conducteurs lignes $L_i$, $L_{i'}$, avec i, i' et j entiers tels que $i \neq i'$, $1 \leq i \leq n$, $1 \leq i' \leq n$ et $1 \leq j \leq m$, et sur la face interne de la deuxième paroi est disposée une contre-électrode formée d'une couche continue d'un matériau conducteur portée à un potentiel de référence. Dans ce dispositif, un point image est défini par un condensateur formé d'une électrode et de la partie de la contre-électrode en regard.

Par ailleurs, les conducteurs lignes et les conducteurs colonnes sont par exemple croisés sur la face interne de l'une des parois du dispositif et les conducteurs résistifs reliés aux conducteurs lignes sont parallèles aux conducteurs colonnes ; mais bien entendu toute autre disposition des conducteurs lignes, des conducteurs colonnes et des conducteurs résistifs sur l'une des parois du dispositif peut être envisagée.

Chaque paquet $P_{ii'j}$ d'électrodes relatif à un paquet d'éléments est par exemple intercalé entre le conducteur ligne $L_i$ et le conducteur ligne $L_{i'}$, à gauche ou à droite du conducteur colonne $C_j$ et du conducteur résistif $R_{ii'j}$ ; i' est de façon avantageuse égal à $i+1$.

Selon un mode préféré de réalisation du dispositif d'affichage, le matériau d'affichage est un film de cristal liquide, les signaux d'excitation étant des tensions électriques.

De façon avantageuse les interrupteurs sont des transistors à effet de champ, chaque transistor $I_l$ associé à une électrode $E_l$ d'un paquet $P_{ii'j}$ étant relié par sa grille au conducteur résistif $R_{ii'j}$ correspondant, par une deuxième borne au conducteur colonne $C_j$ correspondant et par une troisième borne à ladite électrode $E_l$ avec l entier tel que $1 \leq l \leq k$.

Les deuxième et troisième bornes d'un transistor sont indifféremment la source et le drain du transistor.

Selon un autre mode préféré de réalisation, les conducteurs résistifs comprennent des résistances en série ; la valeur résistive de chaque conducteur résistif $R_{ii'j}$ est de préférence identique.

Par ailleurs, la valeur résistive d'un conducteur résistif $R_{ii'j}$ relié par k interrupteurs $I_1$,...$I_k$ aux points images $A_{ii'j1}$,...$A_{ii'jk}$ d'un paquet d'éléments, entre le conducteur ligne $L_i$ et l'interrupteur $I_1$, entre le conducteur ligne $L_{i'}$ et l'interrupteur $I_k$ et entre les différents interrupteurs $I_1$ et $I_2$, $I_2$ et $I_3$,... $I_{k-1}$ et $I_k$ auxquels il est relié, est identique.

L'invention a également pour objet un procédé de commande d'un dispositif d'affichage. Ce procédé est caractérisé en ce que pour commander la propriété optique du matériau d'affichage aux points images $A_{ii'j1}$, ..., $A_{ii'jk}$, correspondant à un paquet d'éléments, avec i, i', j et k entiers tels que $i \neq i'$, $1 \leq i \leq n$, $1 \leq i' \leq n$ et $1 \leq j \leq m$, on applique pendant un temps $T_s = T/(n-1)$ divisé en k fractions de temps $t_l$ sur les conducteurs lignes $L_i$ et $L_{i'}$ respectivement des signaux d'excitation $V_i$ et $V_{i'}$ entraînant à chaque fraction de temps $t_l$, la fermeture d'au moins un des interrupteurs $I_1$, ..., $I_k$ associés auxdits points de façon à ce que chacun desdits interrupteurs soit fermé sur au moins une fraction de temps $t_l$, avec l entier tel que $1 < l < k$, lesdits interrupteurs étant reliés au conducteur résistif $R_{ii'j}$ et sur les autres conducteurs lignes des signaux d'excitation provoquant l'ouverture des interrupteurs associés auxdits autres conducteurs lignes, T étant la période d'adressage d'un point image.

Les signaux d'excitation envoyés sur les conducteurs colonnes dépendent de l'affichage désiré.

Pour obtenir un état excité autrement dit un état affiché au point image $A_{ii'jl}$, on envoie sur le conducteur colonne $C_j$ correspondant un signal d'excitation de valeur supérieure ou égale au potentiel de seuil $V_S$, au moins pendant la dernière fraction de temps $t_l$ pendant lequel l'interrupteur $I_l$ correspondant est fermé, ce temps $t_l$ correspondant à une fraction du temps $T_s$ d'adressage du paquet de points images $A_{ii'j1}$,... $A_{ii'jk}$.

Suivant la valeur dudit signal d'excitation pendant ladite fraction de temps $t_l$, différents niveaux de gris peuvent être affichés au pont image $A_{ii'jl}$, à condition bien entendu que cette valeur soit supérieure ou égale au potentiel de seuil $V_S$.

En revanche, pour obtenir un état non excité autrement dit un état non affiché au point image $A_{ii'jl}$, on envoie sur le conducteur colonne $C_j$ un signal d'excitation de valeurs inférieures au potentiel de seuil $V_S$, au moins pendant ladite dernière fraction de temps $t_l$ pendant lequel l'interrupteur $I_l$ correspondant est fermé.

Les différents états pris par le point image $A_{ii'jl}$ au cours des différentes fractions de temps du temps $T_s$ correspondant, antérieurs à la dernière fraction de temps $t_l$ pendant lequel l'interrupteur $I_l$ de ce point image est fermé, ne peuvent être visualisés par un observateur du fait de leur courte durée. Seul l'état pris par le point image au cours de ce temps $t_l$, conservé le reste du temps T, peut être visualisé par un observateur.

Selon un mode de mise en oeuvre du procédé de commande, on applique sur les conducteurs lignes $L_i$ et $L_{i'}$, respectivement des signaux d'excitation $V_i$ et $V_{i'}$ entraînant à chaque fraction de temps $t_l$ du temps $T_s$ d'adressage des points images $A_{ii'j1}$,... $A_{ii'jk}$, avec l entier tel que $1 \leq l \leq k$, l'ouverture d'un des interrupteurs associés auxdits points images fermés au temps $t_{l-1}$, les autres interrupteurs

conservant leur état, tous les interrupteurs associés auxdits points images étant fermés au temps $t_1$.

De nombreux signaux d'excitation de ce type peuvent être appliqués aux conducteurs lignes.

Ainsi, de façon avantageuse, on applique aux conducteurs lignes $L_i$ et $L_{i'}$ respectivement des signaux d'excitation $V_i$ et $V_{i'}$ entraînant à chaque fraction de temps $t_l$ du temps $T_s$ d'adressage des points images $A_{ii'j1}$,.... $A_{ii'jk}$, la fermeture des interrupteurs $I_1$, ..., $I_u$ associés auxdits points images, avec $u$ entier tel que $u = k-(l-1)$ et l'ouverture des autres interrupteurs associées auxdits points images.

Selon une variante, on applique aux conducteurs lignes $L_i$ et $L_{i'}$ respectivement des signaux d'excitation $V_i$ et $V_{i'}$ entraînant à chaque fraction de temps $t_l$ du temps $T_s$ d'adressage des points images $A_{ii'j1}$,... $A_{ii'jk}$, la fermeture des interrupteurs $I_l$,...,$I_k$ associés auxdits points images et l'ouverture des autres interrupteurs associés auxdits points images.

Dans le cas particulier où $k = 3$ comme dans le cas de la trichromie, un autre mode de mise en oeuvre du procédé peut être utilisé. Ce mode consiste à appliquer au conducteur lignes $L_i$ et $L_{i'}$ respectivement des signaux d'excitation $V_i$ et $V_{i'}$ entraînant au temps $t_1$ la fermeture des interrupteurs $I_1$, $I_2$ et $I_3$, au temps $t_2$, la fermeture de l'interrupteur $I_1$ et l'ouverture des interrupteurs $I_2$, $I_3$ et au temps $t_3$, la fermeture de l'interrupteur $I_3$ et l'ouverture des interrupteurs $I_1$, $I_2$, les temps $t_1$, $t_2$, $t_3$ étant les trois fractions de temps du temps $T_s$ d'adressage des points images $A_{ii'j1}$, $A_{ii'j2}$, $A_{ii'j3}$.

D'autres caractéristiques et avantages de l'invention ressortiront mieux de la description que va suivre donnée à titre purement illustratif et non limitatif en référence aux figures annexées dans lesquelles :

    - les figures 1a et 1b, déjà décrites, représentent schématiquement, respectivement, un dispositif d'affichage de type connu en perspective et la face interne de la paroi de ce dispositif sur laquelle est disposée une matrice d'électrodes ;

    - la figure 2 représente schématiquement la face interne de la paroi d'un exemple de dispositif d'affichage conforme à l'invention, sur laquelle est disposée une matrice d'électrodes ;

    - la figure 3 représente le chronogramme d'un exemple de signaux appliqués aux conducteurs lignes $L_i$ et $L_{i'}$ et au conducteur colonne $C_j$ pour exciter le matériau d'affichage intercalé entre la contre électrode et une ou plusieurs électrodes du paquet $P_{ii'j}$ correspondant ;

    - la figure 4 représente le chronogramme d'un autre exemple de signaux appliqués aux conducteurs lignes $L_i$ et $L_{i'}$ et au conducteur colonne $C_j$ pour exciter le matériau d'affichage intercalé entre la contre électrode et une ou plusieurs électrodes du paquet $P_{ii'j}$ correspondant ;

    - la figure 5 représente le chronogramme d'un autre exemple de signaux appliqués aux conducteurs lignes $L_i$ et $L_{i'}$ et au conducteur colonnes $C_j$ dans le cas particulier où $k = 3$ ; et

    - la figure 6 représente le chronogramme d'un exemple de signaux appliqués aux conducteurs lignes $L_i$ et $L_{i'}$ et au conducteur colonne $C_j$ dans le cas où $k = 3$, permettant d'afficher différents niveaux de gris.

Le dispositif d'affichage conforme à l'invention comprend deux parois isolantes en regard entre lesquelles est intercalé un matériau d'affichage.

Selon un exemple de réalisation, sur la face interne de l'une de ces parois 3 est disposée, comme dans le dispositif d'affichage décrit figure 1a, une contre-électrode formée d'une couche continue d'un matériau conducteur porté à un potentiel de référence.

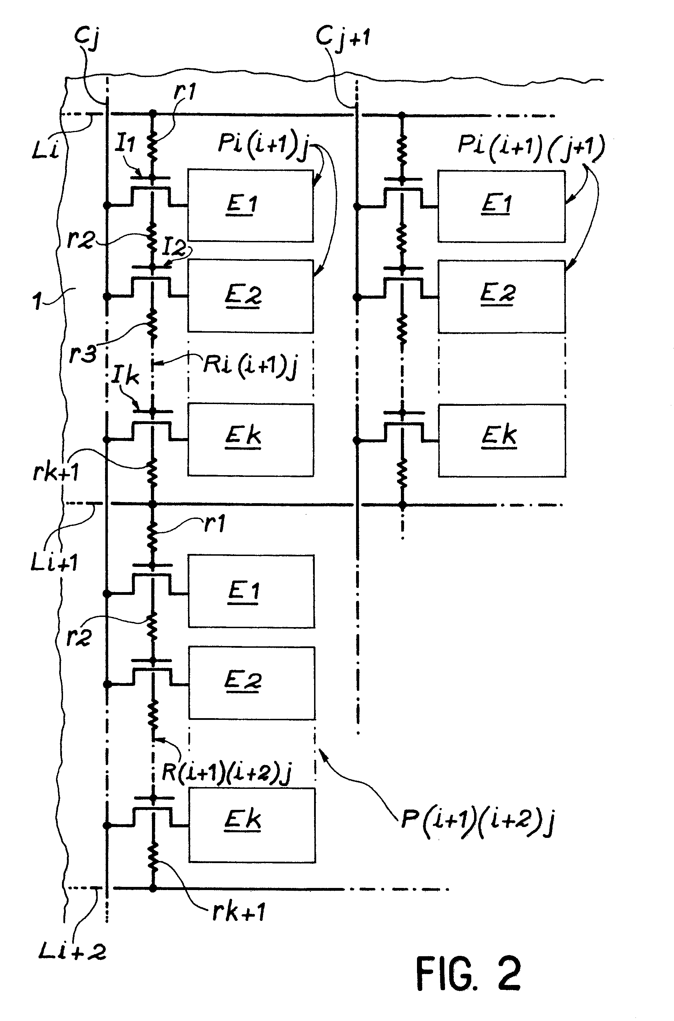

Sur la face interne de l'autre paroi 1 (figure 2) sont disposés n conducteurs lignes parallèles, notés $L_i$, m conducteurs colonnes parallèles, notés $C_j$ croisés avec les conducteurs lignes et $p = (n-1).m$ conducteurs résistifs, notés $R_{ii'j}$, parallèles aux conducteurs colonnes et reliés respectivement entre deux conducteurs lignes $L_i$ et $L_{i'}$, avec $i$, $i'$ et $j$ entiers tels que $i \neq i'$, $1 \leq i \leq n$, $1 \leq i' \leq n$ et $1 \leq j \leq m$ ; dans cet exemple $i'$ est égal à $i+1$.

Par ailleurs, sur la face interne de cette paroi sont disposées p.k électrodes regroupées en p paquets, notés $P_{ii'j}$ de k électrodes chacun, notées $E_l$, avec l entier tel que $1 \leq l \leq k$.

Chaque paquet $P_{ii'j}$ d'électrodes est intercalé entre deux conducteurs lignes $L_i$, $L_{i'}$, par exemple à gauche du conducteur colonne $C_j$ et du conducteur résistif $R_{ii'j}$.

Les électrodes d'un paquet d'électrodes peuvent être parallèles entre elles comme représenté figure 2, ou disposées différemment, par exemple en quinconce.

Chaque électrode $E_l$ d'un paquet $P_{ii'j}$ est reliée au conducteur résistif $R_{ii'j}$ et au conducteur colonne $C_j$, par l'intermédiaire d'un interrupteur $I_l$, ce conducteur résistif étant relié par ailleurs, entre deux conducteurs lignes $L_i$ et $L_{i'}$.

Dans ce dispositif, un point image $A_{ii'jl}$ est défini par le condensateur formé de l'électrode $E_l$ du paquet $P_{ii'j}$ et de la contre-électrode. Ce dispositif comporte donc p paquets de k points images chacun, chaque point image et l'interrupteur qui lui est associé constituant un des éléments de la matrice d'éléments du dispositif d'affichage.

Les interrupteurs du dispositif d'affichage conforme à l'invention sont de façon avantageuse des transistors à effet de champ.

Ainsi, chaque électrode $E_l$ d'un paquet $P_{ii'j}$ est reliée à la source ou au drain d'un transistor $I_l$, la grille de ce transistor est reliée au conducteur résistif $R_{ii'j}$ et son drain ou sa source au conducteur colonne $C_j$. On peut en effet relier indifféremment la source et le drain du transistor $I_l$ au conducteur colonne correspondant et à l'électrode $E_l$.

Chaque conducteur résistif $R_{ii'j}$, associé à un paquet $P_{ii'j}$ d'électrodes $E_1$, ..., $E_k$ et relié entre les conducteurs lignes $L_i$ et $L_{i'}$, comprend par exemple, comme représenté figure 2, des résistances en série. Ainsi, une résistance $r_1$ est intercalée entre le conducteur ligne $L_i$ et l'interrupteur $I_1$, une résistance $r_2$ est intercalée entre les interrupteurs $I_1$ et $I_2$ et ainsi de suite jusqu'à la résistance $r_{k+1}$ intercalée entre l'interrupteur $I_k$ et le conducteur ligne $L_{i'}$.

Lorsque k est égal à 4, le conducteur résistif $R_{ii'j}$ comprend cinq résistances en série $r_1$, $r_2$, $r_3$, $r_4$ et $r_5$.

De façon avantageuse, chaque conducteur résistif $R_{ii'j}$ du dispositif d'affichage comporte les mêmes résistances en série $r_1$, $r_2$, ..., $r_l$, ..., $r_{k+1}$, ces différentes résistances pouvant avoir la même valeur résistive.

La grille d'un transistor $I_l$ reliée à un conducteur résistif $R_{ii'j}$ est à un potentiel compris au sens large, entre le potentiel du conducteur ligne $L_i$ et le potentiel du conducteur ligne $L_{i'}$. Pour que le transistor $I_l$ soit passant, autrement dit conducteur, le potentiel appliqué à sa grille doit être supérieur ou égal à un potentiel de seuil, noté $V_t$ ; dans le cas contraire, le transistor est bloqué, autrement dit il n'est pas conducteur.

En choisissant de façon appropriée les signaux d'excitation appliqués aux conducteurs lignes, on peut rendre conducteurs sélectivement les transistors associés à ces conducteurs lignes, par l'intermédiaire des conducteurs résistifs. Lorsqu'un transistor $I_l$ relié à une électrode $E_l$ d'un paquet $P_{ii'j}$ est passant, il transmet à l'électrode $E_l$, le signal d'excitation véhiculé par le conducteur colonne $C_j$ correspondant.

Le dispositif d'affichage conforme à l'invention est compatible avec toutes les technologies de réalisation des transistors à effet de champ telles que la technique classique consistant à réaliser la source et le drain d'un transistor puis la grille de ce dernier et la technique consistant à réaliser tout d'abord la grille d'un transistor et à utiliser cette grille comme masque pour définir la source et le drain du transistor de façon à ce que ces derniers soient auto-positionnés par rapport à la grille.

Par ailleurs, chaque conducteur résistif est constitué par un dépôt de matériau résistif dont les dimensions sont fonction des valeurs des résistances $r_1$,...$r_{k+1}$. De plus, les grilles des transistors n'étant pas traversées par des courants, ces dernières peuvent être définies dans le dépôt de matériau résistif constituant les conducteurs résistifs. Ainsi, par exemple, un conducteur résistif dont les résistances $r_1$,...$r_{k+1}$ sont de même valeur, est constitué par un dépôt de matériau résistif comportant $k+1$ parties de même longueur, de même largeur et de même épaisseur, chaque partie correspondant à une résistance et k fractions intercalées entre ces $k+1$ parties constituant les grilles des transistors reliés à ce conducteur résistif ; la largeur desdites fractions est généralement inférieure à la largeur desdites parties.

De façon avantageuse, les conducteurs lignes et éventuellement une partie des conducteurs colonnes sont réalisés en même temps que les conducteurs résistifs et les grilles des transistors, par dépôt d'un matériau résistif tel que du silicium amorphe hydrogéné de type n+, du siliciure ou de l'oxyde d'indium et d'étain, à travers un masque de motifs appropriés.

De façon avantageuse, on réalise ultérieurement, de façon connue, un doublement des conducteurs lignes et colonnes, ce doublement permettant de diminuer la résistivité de ces conducteurs.

Lorsque le dispositif d'affichage conforme à l'invention est regardé par transmission, les deux parois 1,3 du dispositif sont transparentes ainsi que les électrodes et la contre-électrode. En revanche, lorsque ce dispositif est regardé par réflexion, il suffit que la paroi la plus proche de l'observateur soit transparente ainsi que les électrodes ou la contre-électrode associée à cette paroi ; mais bien entendu, les deux parois, les électrodes et la contre-électrode du dispositif d'affichage peuvent être transparentes.

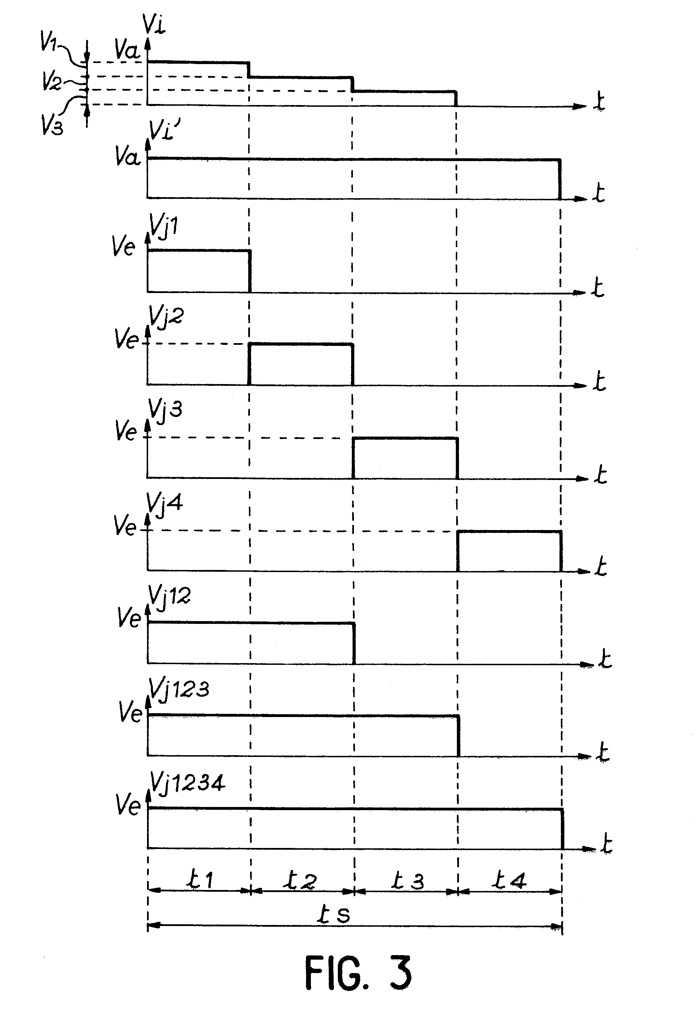

Les figures 3 à 6 donnent des exemples de signaux appliqués aux conducteurs lignes et colonnes pour commander la propriété optique du matériau d'affichage aux points images associés à un paquet d'électrodes.

La figure 3 représente un premier exemple de signaux d'excitation permettant de commander la propriété optique du matériau d'affichage aux points images associés à un paquet $P_{ii'j}$ d'électrodes. Pour plus de clarté dans la description, on a choisi des paquets respectivement de 4 électrodes (k=4), étant bien entendu que k peut prendre n'importe quelle valeur entière à partir de 1.

Les signaux d'excitation $V_i$ et $V_{i'}$ sont appliqués respectivement aux conducteurs lignes $L_i$ et $L_{i'}$ ; les signaux d'excitation $V_{j1}$, $V_{j2}$, $V_{j3}$, $V_{j4}$ sont appliqués au conducteur colonne $C_j$ pour commander un état affiché respectivement aux points images correspondant aux électrodes $E_1$, $E_2$, $E_3$ et $E_4$ et les signaux d'excitation $V_{j1,2,3}$ et $V_{j1,2,3,4}$ sont appliqués au conducteur colonne $C_j$ pour commander un état affiché aux points images correspondant respectivement à l'ensemble des électrodes $E_1$, $E_2$, $E_3$, et à l'ensemble des électrodes $E_1$, $E_2$, $E_3$, $E_4$.

Pour adresser un paquet $P_{ii'j}$ d'électrodes, on envoie pendant un temps $T_s = T/(n-1)$ sur les conducteurs lignes $L_i$ et $L_{i'}$ correspondants des signaux d'excitation $V_i$ et $V_{i'}$ sélectionnant soit l'état passant, soit l'état bloquant des transistors associés à ces conducteurs lignes par l'intermédiaire des conducteurs résistifs et sur les autres conducteurs lignes différents de $L_i$ et $L_{i'}$, des signaux d'excitation bloquant les transistors associés à ces autres conducteurs lignes, T étant la période d'adressage d'un point image. Au temps $T_s$ suivant, on envoie sur deux autres conducteurs lignes tels que les conducteurs $L_{i'}$ et $L_{i''}$ avec par exemple $i' = i+1$ et $i'' = i+2$, des signaux d'excitation sélectionnant l'état passant ou bloquant des transistors qui leur sont associés et sur les autres conducteurs lignes des signaux bloquant les transistors associés à ces autres conducteurs lignes et ainsi de suite jusqu'à ce que l'ensemble des paquets d'électrodes ait été adressé. Par ailleurs, les signaux d'excitation véhiculés par les conducteurs colonnes sont transmis aux électrodes reliées à des interrupteurs fermés.

Chaque temps $T_s$ est divisé en k fractions de temps $t_l$, chaque fraction de temps $t_l$, avec l entier tel que $1 \leq l \leq k$ permettant de sélectionner l'état passant d'au moins un des transistors associés à un paquet d'électrodes.

La description ci-après est donnée pour l'adressage de quatre électrodes $E_1$, $E_2$, $E_3$, $E_4$ d'un paquet $P_{ii'j}$ (k=4). Par ailleurs, les résistances $r_1$, $r_2$, $r_3$, $r_4$, $r_5$ intercalées respectivement entre le conducteur $L_i$ et

le transistor $I_1$, entre les transistors $I_1$ et $I_2$, entre les transistors $I_2$ et $I_3$, entre les transistors $I_3$ et $I_4$ et entre le transistor $I_4$ et le conducteur ligne $L_{i'}$ sont choisies de même valeur résistive.

Au temps $t_1$, les signaux $V_i$ et $V_{i'}$ appliqués respectivement aux conducteurs lignes $L_i$ et $L_{i'}$ ont une même valeur égale à $V_a$ telle que $V_a$ soit supérieur ou égal à $V_t$ ; les grilles des transistors $I_1$, $I_2$, $I_3$, $I_4$ associés aux électrodes $E_1$, $E_2$, $E_3$, $E_4$ sont donc au potentiel $V_a$. Les transistors $I_1$, $I_2$, $I_3$, $I_4$ sont passants.

Au temps $t_2$, le signal $V_i$ est égal à $V_a\text{-}V_1$ et le signal $V_{i'}$ est égal à $V_a$ ; les grilles des transistors $I_1$, $I_2$, $I_3$, $I_4$ sont respectivement aux potentiels $V_a\text{-}4V_1/5$, $V_a\text{-}3V_1/5$, $V_a\text{-}2V_1/5$ et $V_a\text{-}V_1/5$. La valeur de $V_1$ est choisie de façon à vérifier l'inégalité suivante :

$$V_a\text{-}kV_1/(k+1) < V_t \leq V_a\text{-}(k-1)V_1/(k+1),$$

autrement dit pour $k=4$, $V_1$ est tel que :

$$V_a\text{-}4V_1/5 < V_t \leq V_a\text{-}3V_1/5.$$

Ainsi au temps $t_2$, le transistor $I_1$ est bloqué et les transistors $I_2$, $I_3$, $I_4$ sont passants.

Au temps $t_3$, le signal $V_i$ est égal à $V_a\text{-}(V_1+V_2)$ et le signal $V_{i'}$ est égal à $V_a$ ; les grilles des transistors $I_1$, $I_2$, $I_3$, $I_4$ sont respectivement aux potentiels $V_a\text{-}4(V_1+V_2)/5$, $V_a\text{-}3(V_1+V_2)/5$, $V_a\text{-}2(V_1+V_2)/5$ et $V_a\text{-}(V_1+V_2)/5$ avec $V_2$ tel que :

$$V_a\text{-}3(V_1+V_2)/5 < V_t \leq V_a\text{-}2(V_1+V_2)/5$$

Au temps $t_3$, les transistors $I_1$ et $I_2$ sont bloqués et les transistors $I_3$ et $I_4$ sont passants.

Au temps $t_4$, le signal $V_i$ est égal à $V_a\text{-}(V_1+V_2+V_3)$ et le signal $V_{i'}$ est égal à $V_a$ ; les grilles des transistors $I_1$, $I_2$, $I_3$, $I_4$ sont respectivement aux potentiels $V_a\text{-}4(V_1+V_2+V_3)/5$, $V_a\text{-}3(V_1+V_2+V_3)/5$, $V_a\text{-}2(V_1+V_2+V_3)/5$ et $V_a\text{-}(V_1+V_2+V_3)/5$ avec $V_3$ tel que :

$$V_a\text{-}2(V_1+V_2+V_3)/5 < V_t \leq V_a\text{-}(V_1+V_2+V_3)/5.$$

Ainsi, au temps $t_4$, les transistors $I_1$, $I_2$, $I_3$, sont bloqués et le transistor $I_4$ est passant.

Les potentiels $V_1$, $V_2$, $V_3$ peuvent être choisis aussi bien égaux que différents. Par ailleurs, le potentiel $V_a$ peut être égal à la somme des potentiels $V_1$, $V_2$ et $V_3$ comme représenté sur la figure 3, mais bien entendu il peut être également supérieur à cette somme.

Pour commander un état affiché au point image $A_{iij'1}$, autrement dit, pour exciter le matériau d'affichage intercalé entre l'électrode $E_1$ du paquet $P_{ii'j}$ et la contre-électrode, on envoie sur le conducteur colonne $C_j$ un signal $V_{j1}$ de valeur $V_e$ pendant le temps $t_1$ où tous les interrupteurs sont passants et de valeur nulle aux temps $t_2$, $t_3$, $t_4$ suivants pendant lesquels le transistor $I_1$ est bloqué. La valeur de $V_e$ est telle que $V_e \geq V_s$.

Ainsi au temps $t_1$, l'ensemble des transistors $I_1$, $I_2$, $I_3$, $I_4$ transmettront aux électrodes correspondantes, le potentiel $V_e$.

Au temps $t_2$, le transistor $I_1$ est bloqué, l'électrode $E_1$ conserve donc le potentiel $V_e$, aux chutes de tension près. En revanche, les transistors $I_2$, $I_3$, $I_4$ étant passant et le signal $V_{j1}$ étant nul, les potentiels des électrodes $E_2$, $E_3$, $E_4$ sont également nuls.

Aux temps $t_3$ et $t_4$ pendant lesquels respectivement le transistor $I_2$ et le transistor $I_3$ se bloquent à leur tour, le signal $V_{j1}$ restant nul, les potentiels des électrodes $E_2$, $E_3$, $E_4$, restent inchangés.

Le signal $V_{j1}$ permet donc d'exciter le matériau d'affichage uniquement entre l'électrode $E_1$ et la contre électrode.

Pour commander un état affiché uniquement au point image $A_{ii'j2}$, autrement dit pour exciter le matériau d'affichage intercalé entre l'électrode $E_2$ correspondante et la contre électrode, on envoie sur la colonne $C_j$ un signal $V_{j2}$ nul au temps $t_1$, $t_3$, $t_4$ et égal à $V_e$ aux temps $t_2$.

Ainsi, au temps $t_1$ les transistors $I_1$, $I_2$, $I_3$, $I_4$ étant passants et le signal $V_{j2}$ étant nul, aucun potentiel n'est appliqué aux électrodes correspondantes. Au temps $t_2$, le transistor $I_1$ est bloqué, le signal non nul $V_e$ appliqué à la colonne $C_j$ est transmis uniquement par les transistors $I_2$, $I_3$, $I_4$ passants aux électrodes $E_2$, $E_3$, $E_4$ correspondantes. Au temps $t_3$, l'interrupteur $I_2$ est bloqué, l'électrode $E_2$ conserve donc le potentiel $V_e$, en revanche, les transistors $I_3$, $I_4$ étant passants, un potentiel nul est appliqué aux électrodes correspondantes. Au temps $t_4$, le transistor $I_3$ est à son tour bloqué, le potentiel de l'électrode $E_3$ reste donc nul et le transistor $I_4$ étant passant mais le signal $V_{j2}$ étant nul, le potentiel de l'électrode $E_4$ est également nul.

De même, pour commander un état affiché uniquement au point image $A_{ii'j3}$, on envoie sur le conducteur colonne correspondant, un signal $V_{j3}$ égal à $V_e$ uniquement pendant le temps $t_3$ correspondant à la dernière fraction de temps du temps $T_s$ pendant lequel le transistor $I_3$ est passant ; et pour commander un état affiché uniquement au point image $A_{ii'j4}$, on envoie sur le conducteur colonne correspondant un signal $V_{j4}$ égal à $V_e$ uniquement pendant le temps $t_4$ correspondant à la dernière fraction de temps du temps $T_s$ pendant lequel le transistor $I_4$ est passant.

Lorsque l'on veut commander un état affiché en deux points images correspondants à deux électrodes d'un paquet d'électrodes, on envoie sur le conducteur colonne $C_j$ correspondant, un signal électrique égal à la somme des signaux permettant de commander un état affiché en chacun des points images seuls.

Ainsi, pour commander un état affiché aux points images $A_{ii'j1}$ et $A_{ii'j2}$, on envoie sur le conducteur colonne $C_j$ correspondant, un signal $V_{j1,2}$ égal à la somme des signaux $V_{j1}$ et $V_{j2}$.

Pour commander un état affiché en trois points images correspondant à trois électrodes d'un paquet d'électrodes, on combine de la même façon, les signaux d'excitation permettant de commander un état affiché en chacun des points images seuls. Ainsi, lorsque l'on veut commander un état affiché aux points images $A_{ii'j1}$, $A_{ii'j2}$ et $A_{ii'j3}$, on envoie sur le conducteur colonne $C_j$ correspondant un signal $V_{j1,2,3}$ correspondant à la somme des signaux $V_{j1}$, $V_{j2}$, $V_{j3}$.

De façon identique pour commander un état affiché à l'ensemble des points images correspondants à un paquet d'electrodes, on envoie sur le conducteur colonne $C_j$ correspondant un signal égal à la somme des signaux permettant de commander un état affiché en chacun de ces points images seuls. Ainsi, pour commander un état affiché aux points images $A_{ii'j1}$, $A_{ii'j2}$, $A_{ii'j3}$ et $A_{ii'j4}$, on envoie sur le conducteur colonne $C_j$ un signal $V_{j1,2,3,4}$ correspondant à la somme des signaux $V_{j1}$, $V_{j2}$, $V_{j3}$, $V_{j4}$.

Cet exemple de commande du dispositif d'affichage conforme à l'invention consiste donc à appliquer aux conducteurs lignes $L_i$ et $L_{i'}$ des signaux d'excitation $V_i$ et $V_{i'}$ entraînant à chaque fraction de temps $t_l$ du temps $T_s$ d'adressage des électrodes d'un paquet, l'état passant des transistors $I_l$, ..., $I_k$ associées à ces électrodes et l'état bloqué des autres transistors associés à ces électrodes. Les signaux envoyés sur les conducteurs colonnes dépendent de l'affichage désiré.

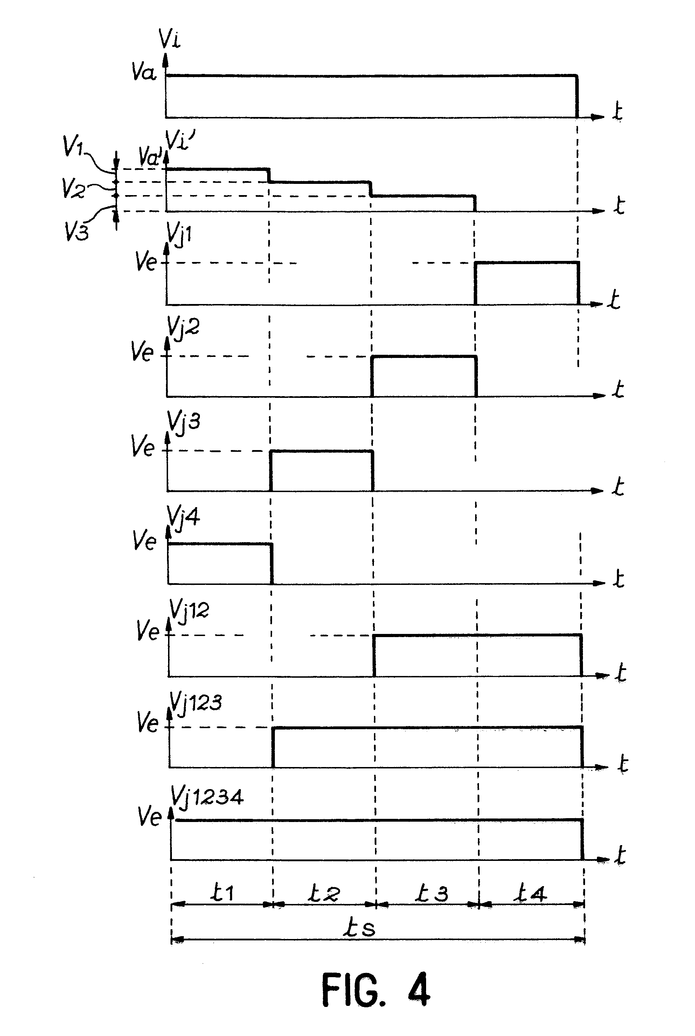

La figure 4 donne une variante de signaux permettant de commander la propriété optique du matériau aux points images correspondant aux paquets d'électrodes, quelle que soit la valeur de k. Sur cette figure pour plus de clarté, on a choisi également k égal à 4.

Sur le conducteur ligne $L_i$, on applique un signal $V_i$ et sur le conducteur ligne $L_{i'}$, on applique un signal $V_{i'}$. Au temps $t_1$, les signaux $V_i$ et $V_{i'}$ ont la même valeur $V_a$ ; les grilles des transistors $I_1$, $I_2$, $I_3$, $I_4$ associés aux électrodes $E_1$, $E_2$, $E_3$, $E_4$ sont donc passants.

Au temps $t_2$, le signal $V_i$ est égal à $V_a$ et le signal, $V_{i'}$ est égal à $V_a-V_1$ ; les grilles des transistors $I_1$, $I_2$, $I_3$, $I_4$ sont respectivement aux potentiels $V_a-V_1/5$, $V_a-2V_1/5$, $V_a-3V_1/5$, $V_a-4V_1/5$. La valeur $V_1$ est choisie de façon à vérifier la même condition que pour la figure 3. Ainsi, au temps $t_2$ le transistor $I_4$ est bloqué et les transistors $I_1$, $I_2$, $I_3$ sont passants.

Au temps $t_3$, le signal $V_i$ est égal à $V_a$ et le signal $V_{i'}$ est égal à $V_a-(V_1+V_2)$ ; les grilles des transistors $I_1$, $I_2$, $I_3$, $I_4$ sont respectivement aux potentiels $V_a-(V_1+V_2)/5$, $V_a-2(V_1+V_2)/5$, $V_a-3-(V_1+V_2)/5$, $V_a-4(V_1+V_2)/5$, avec $V_2$ vérifiant la même condition que pour la figure 3. Ainsi, au temps $t_3$, les transistors $I_3$ et $I_4$ sont bloqués et les transistors $I_1$ et $I_2$ sont passants.

Au temps $t_4$, le signal $V_i$ est égal à $V_a$ et le signal $V_{i'}$ est égal à $V_a-(V_1+V_2+V_3)$ ; les grilles des transistors $I_1$, $I_2$, $I_3$, $I_4$ sont respectivement aux potentiels $V_a-(V_1+V_2+V_3)/5$, $V_a-2(V_1+V_2+V_3)/5$, $V_a-3(V_1+V_2+V_3)/5$ et $V_a-4(V_1+V_2+V_3)/5$, avec $V_3$ vérifiant la même condition que pour la figure 3. Ainsi, au temps $t_4$, les transistors $I_2$, $I_3$, $I_4$ sont bloqués et la transistor $I_1$ est passant.

Aussi, pour commander un état affiché au point image $A_{ii'j1}$, on envoie sur le conducteur colonne $C_j$ correspondant, un signal $V_{j1}$ nul aux temps $t_1$, $t_2$, $t_3$ et égal à $V_e$ au temps $t_4$.

Pour commander un état affiché au point image $A_{ii'j2}$, on envoie sur le conducteur colonne $C_j$ correspondant, un signal $V_{j2}$ nul aux temps $t_1$, $t_2$, et $t_4$ et égal à $V_e$ au temps $t_3$.

Pour commander un état affiché au point image $A_{ii'j3}$, on envoie sur le conducteur colonne $C_j$ correspondant un signal $V_{j3}$ nul aux temps $t_1$, $t_3$, $t_4$ et égal à $V_e$ au temps $t_2$.

Et enfin, pour commander un état affiché au point image $A_{ii'j4}$, on envoie sur le conducteur colonne $C_j$ correspondant un signal $V_{j4}$ nul aux temps $t_2$, $t_3$, $t_4$ et égal à $V_e$ au temps $t_1$.

Suivant les points images d'un paquet d'électrodes pour lesquels on veut commander un état affiché, on combine les signaux $V_{j1}$, $V_{j2}$, $V_{j3}$, $V_{j4}$ pour commander cet état affiché en deux, trois ou même quatre points images.

Ainsi le signal $V_{j1,2}$ envoyé sur le conducteur colonne $C_j$ correspondant à la somme des signaux $V_{j1}$, $j2$ permet de commander un état affiché aux points images $A_{ii'j1}$ et $A_{ii'j2}$. Le signal $V_{j1,2,3,4}$ envoyé sur le conducteur colonne $C_j$ correspondant à la somme des signaux $V_{j1}$, $V_{j2}$, $V_{j3}$ permet de commander un état affiché aux points images $A_{ii'j1}$, $A_{ii'j2}$, $A_{ii'j3}$. Le signal $V_{j1,2,3,4}$ appliqué sur le conducteur colonne $C_j$ correspondant à la somme des $V_{j1}$, $V_{j2}$, $V_{j3}$, $V_{j4}$ permet de commander un état affiché aux points images $A_{ii'j1}$, $A_{ii'j2}$, $A_{ii'j3}$, $A_{ii'j4}$.

Pour commander le dispositif d'affichage conforme à l'invention, on envoie donc par exemple sur les conducteurs lignes $L_i$ et $L_{i'}$ des signaux d'excitation $V_i$ et $V_{i'}$ entraînant à chaque fraction de temps $t_l$ du temps $T_s$ d'adressage des électrodes d'un paquet d'électrodes, la fermeture des transistors $I_1$, ..., $I_u$ associés à ces électrodes, avec $u$ entier tel que $u=k-(I-1)$, et l'ouverture des autres transistors associés à ces électrodes. Les signaux envoyés sur les conducteurs colonnes dépendent de l'affichage désiré.

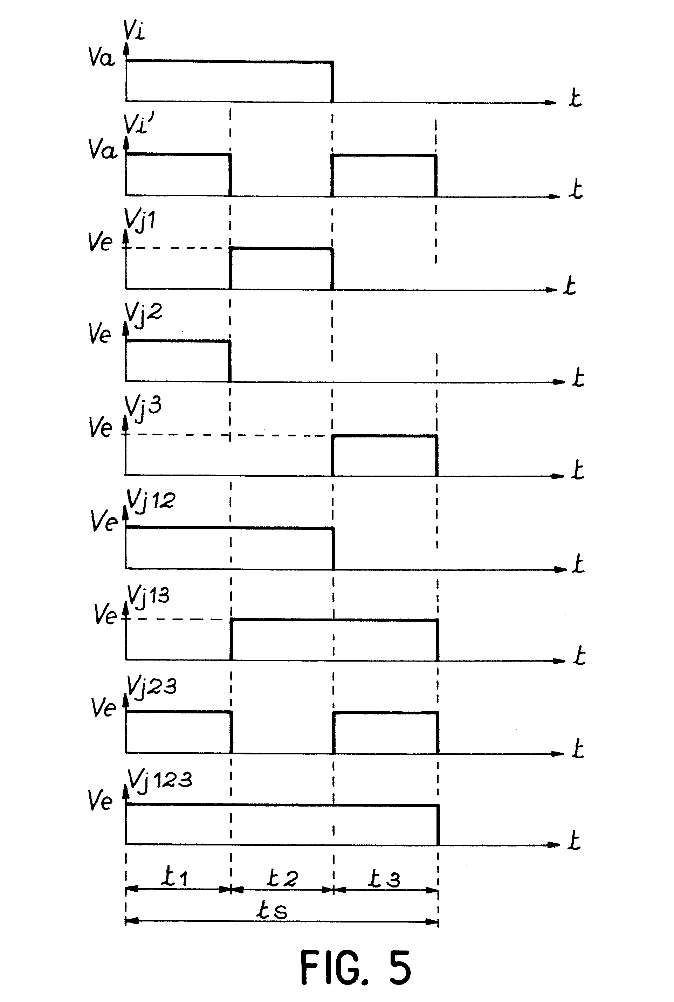

La figure 5 donne un exemple de signaux permettant de commander les dispositifs d'affichage dans le cas particulier où chaque paquet comprend trois électrodes comme par exemple dans le cas de l'affichage trichrome.

Ainsi, pour commander la propriété optique du matériau aux points images $A_{ii'j1}$, $A_{ii'j2}$, $A_{ii'j3}$ correspondants au paquet $P_{ii'j}$ d'électrodes $E_1$, $E_2$, $E_3$, on applique sur le conducteur ligne $L_i$ le potentiel $V_i$ et sur le conducteur ligne $L_{i'}$ le potentiel $V_{i'}$. Le temps d'adressage $T_s$ du paquet $P_{ii'j}$ d'électrodes est divisé en trois fractions de temps $t_1$, $t_2$, $t_3$.

Au temps $t_1$, les signaux $V_i$ et $V_{i'}$ ont une même valeur $V_a$ : les grilles des transistors $I_1$, $I_2$, $I_3$, associées aux électrodes $E_1$, $E_2$, $E_3$ du paquet $P_{ii'j}$ sont au potentiel $V_a$. Les transistors $I_1$, $I_2$, $I_3$ sont donc passants.

Au temps $t_2$, le signal $V_i$ est égal à $V_a$ et le signal $V_{i'}$ est nul ; les grilles des transistors $I_1$, $I_2$, $I_3$ sont respectivement aux potentiels $V_a/2$, $V_a/3$, $V_a/4$, de façon à ce que le transistor $I_1$ soit passant et les transistors $I_2$ et $I_3$ soient bloqués.

Au temps $t_3$, le signal $V_i$ est nul et le signal $V_{i'}$ est égal à $V_a$ ; les grilles des transistors $I_1$, $I_2$, $I_3$ sont respectivement aux potentiels $V_a/4$, $V_a/3$, $V_a/2$ de façon à ce que les transistors $I_1$, $I_2$ soient bloqués et le transistor $I_3$ soit passant.

Pour commander un état affiché au point image $A_{ii'j1}$, on envoie sur le conducteur colonne $C_j$ correspondant, un signal $V_{j1}$ nul aux temps $t_1$ et $t_3$ et égal à $V_e$ au temps $t_2$ pendant lequel seul le transistor $I_1$ est passant.

Pour commander un état affiché au point image

$A_{ii'j2}$, on envoie sur le conducteur colonne $C_j$ un signal $V_{j2}$ égal à $V_e$ au temps $t_1$ pendant lequel le transistor $I_2$ est passant et nul, aux temps $t_2$ et $t_3$ suivants.

Pour commander un état affiché au point image $A_{ii'j3}$, on envoie sur le conducteur colonne $C_j$ correspondant, un signal $V_{j3}$ nul aux temps $t_1$ et $t_2$ et égal à $V_e$ au temps $t_3$ pendant lequel seul le transistor $I_3$ est passant.

Pour commander un état affiché aux points images $A_{ii'j1}$ et $A_{ii'j2}$, on envoie sur le conducteur colonne $C_j$ correspondant un signal $V_{j1,2}$ correspondant à la somme des signaux $V_{j1}$ et $V_{j2}$.

Pour commander un état affiché aux points images $A_{ii'j1}$ et $A_{ii'j3}$, on envoie sur le conducteur colonne $C_j$ correspondant, un signal $V_{j1,3}$ correspondant à la somme des signaux $V_{j1}$ et $V_{j3}$.

Pour commander un état affiché aux points images $A_{ii'j2}$ et $A_{ii'j3}$, on envoie sur le conducteur colonne $C_j$ correspondant un signal $V_{j2,3}$ correspondant à la somme des signaux $V_{j2}$ et $V_{j3}$.

Enfin, pour commander un état affiché aux points images $A_{ii'j1}$, $A_{ii'j2}$ et $A_{ii'j3}$, on envoie sur le conducteur colonne $C_j$ un signal $V_{j1,2,3}$, égal à la somme des signaux $V_{j1}$, $V_{j2}$ et $V_{j3}$.

Il est bien entendu que pour des dispositifs d'affichage comprenant des paquets de trois électrodes, les procédés de commande décrits précédemment figures 3 et 4 sont également applicables.

Pour afficher des niveaux de gris, les signaux appliqués aux conducteurs colonnes, doivent prendre des niveaux de tension variables.

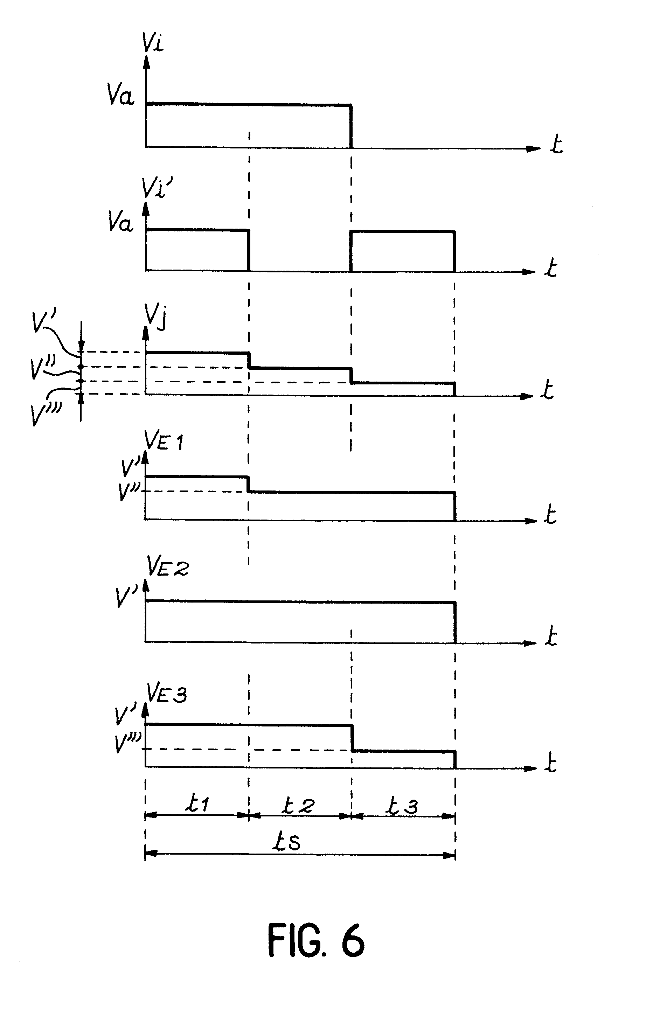

La figure 6 représente à titre d'exemple dans le cas d'un paquet de trois électrodes, le signal appliqué au conducteur colonne $C_j$ permettant d'afficher des niveaux de gris aux points images correspondants.

Les signaux $V_i$ et $V_{i'}$ appliqués au conducteur lignes $L_i$ et $L_{i'}$ sont par exemple identiques à ceux décrits figure 5. Par contre le signal $V_j$ appliqué au conducteur colonne $C_j$ prend différentes valeurs $V'$, $V''$, $V'''$, ces trois valeurs étant toutes supérieures ou égales au potentiel de seuil $V_S$ et telles que $V' > V'' > V'''$.

Ainsi, au temps $t_1$ pendant lequel les transistors $I_1$, $I_2$, $I_3$ sont passants, le signal appliqué au conducteur colonne $C_j$ est égal à $V'$, les potentiels $V_{E1}$, $V_{E2}$, $V_{E3}$ respectivement des électrodes $E_1$, $E_2$, $E_3$ sont égaux à $V'$.

Au temps $t_2$ pendant lequel le transistor $I_1$ est passant les transistors $I_2$ et $I_3$ sont bloqués, le signal $V_j$ appliqué au conducteur colonne $C_j$ prend la valeur $V''$. Aussi, les potentiels $V_{E1}$, $V_{E2}$, $V_{E3}$ des électrodes $E_1$, $E_2$, $E_3$ sont respectivement égaux à $V''$, $V'$ et $V'$.

Au temps $t_3$ pendant lequel les transistors $I_1$ et $I_2$ sont bloqués et le transistor $I_3$ est passant, le signal $V_j$ envoyé sur le conducteur colonne $C_j$ prend la valeur $V'''$ ; les potentiels $V_{E1}$, $V_{E2}$, $V_{E3}$ respectivement des électrodes $E_1$, $E_2$, $E_3$ sont donc égaux à $V''$, $V'$ et $V'''$.

Les potentiels conservés par les électrodes $E_1$, $E_2$, $E_3$ pendant le reste de la période T, correspondent aux fuites de charge près, aux potentiels $V''$, $V'$ et $V'''$. Ces différentes valeurs de potentiels permettent ainsi d'afficher différents niveaux de gris à chaque point image associé à un paquet d'électrodes du dispositif d'affichage.

Les figures 3 à 6 illustrent des exemples de procédés de commande dont les signaux appliqués aux conducteurs lignes varient de la valeur $V_a$ à une valeur nulle et les signaux appliqués aux conducteurs colonnes varient de $V_e$ ou $V'$ à une valeur nulle, mais bien entendu des signaux appliqués aux conducteurs lignes variant de la valeur $V_a$ à une valeur non nulle inférieure à $V_t$, permettant de sélectionner de la même façon l'état passant ou bloqué des transistors, et des signaux appliqués aux conducteurs colonnes variant de $V_e$ ou $V'$ à une valeur non nulle inférieure à $V_S$ sont également possibles.

Par ailleurs, les exemples de procédé de commande décrits précédemment ne sont pas limitatifs, de nombreuses variantes peuvent être réalisées sans pour autant sortir du cadre de l'invention.

Ainsi, par exemple avec les procédés de commande décrits figures 3 et 4, en appliquant des signaux d'excitation aux conducteurs colonnes prenant différentes valeurs, comme décrit figure 6, on peut également afficher différents niveaux de gris.

De plus, les figures 3 et 4 représentent des signaux $V_i$ et $V_{i'}$ appliqués aux conducteurs lignes $L_i$ et $L_{i'}$ dont l'un a une valeur fixe et l'autre une valeur variable pendant le temps $T_s$, mais bien entendu on peut appliquer à ces conducteurs lignes des signaux $V_i$ et $V_{i'}$ prenant respectivement différentes valeurs au cours du temps $T_s$ de façon à sélectionner à chaque fraction de temps $t_l$ du temps $T_s$, la fermeture d'au moins un des interrupteurs associé à un paquet d'électrodes.

La description ci-dessus est donnée à titre indicatif pour un dispositif d'affichage comprenant une matrice d'électrodes et une contre-électrode, étant bien entendu que l'invention s'applique à d'autres dispositifs d'affichage tels que par exemple celui décrit dans le document FR-A-2 553 218.

Ainsi, par exemple, un dispositif d'affichage conforme à l'invention du type de celui décrit dans le document FR-A-2 553 218 comporte un matériau d'affichage intercalé entre deux parois. Sur l'une des parois sont disposés m conducteurs colonnes reliés chacun à une électrode colonne et sur l'autre paroi sont disposés n conducteurs lignes, $p = (n-1).m$ conducteurs résistifs et p.k électrodes, chaque conducteur résistif $R_{ii'j}$ étant relié entre deux conducteurs lignes $L_i$ et $L_{i'}$, avec $i \neq i'$, $1 \leq i \leq n$, $1 \leq i' \leq n$ et $1 \leq j \leq m$. Les p.k électrodes sont regroupées en p paquets de k électrodes chacun, toutes les électrodes d'un paquet étant en regard d'une même électrode colonne. Par ailleurs, les électrodes $E_1, \ldots E_k$ d'un paquet $P_{ii'j}$ sont reliées respectivement par des transistors $I_1, \ldots I_k$ au conducteur résistif $R_{ii'j}$ lui-même relié entre les conducteurs lignes $L_i$ et $L_{i'}$, ces transistors étant en outre connectés à un potentiel de référence.

## Revendications

1. Dispositif d'affichage matriciel comprenant un matériau d'affichage possédant une propriété optique intercalé entre une première et une deuxième parois isolantes, caractérisé en ce qu'il comprend une matrice de p.k éléments constitués chacun d'un interrupteur ($I_l$) et d'un point image défini par un condensateur formé de deux électrodes ($E_l$,13) disposées sur l'une et l'autre des deux parois, n conducteurs lignes ($L_i$), m conducteurs colonnes ($C_j$) et p conducteurs résistifs ($R_{ii'j}$), chaque conducteur résistif $R_{ii'j}$ étant connecté entre deux conducteurs lignes $L_i$, $L_{i'}$, avec p, k, n, m, i, i', j entiers tels que $i \neq i'$, $1 \leq i \leq n$, $1 \leq i' \leq n$, $1 \leq j \leq m$, et $p = m.(n-1)$, les p.k. éléments étant regroupés en p paquets de k éléments chacun, les éléments de chaque paquet étant reliés à un conducteur colonne et à un conducteur résistif, des signaux appropriés à l'excitation du matériau d'affichage étant appliqués aux conducteurs lignes et aux conducteurs colonnes.

2. Dispositif d'affichage matriciel selon la revendication 1, caractérisé en ce que sur la face interne de la première paroi sont disposés les n conducteurs lignes, les m conducteurs colonnes, les p conducteurs résistifs, et p.k électrodes regroupées en p paquets de k électrodes chacun, avec p, k, n, m entiers et $p = m(n-1)$, les électrodes $E_1$, ..., $E_k$ d'un paquet $P_{ii'j}$ étant reliées repectivement par des interrupteurs $I_1$, ..., $I_k$ à un conducteur colonne $C_j$ et à un conducteur résistif $R_{ii'j}$ lui-même connecté entre deux conducteurs lignes $L_i$, $L_{i'}$, avec i, i' et j entiers tels que $i \neq i'$, $1 \leq i \leq n$, $1 \leq i' \leq n$, et $1 \leq j \leq m$, et sur la face interne de la deuxième paroi est disposée une contre-électrode (13) formée d'une couche continue d'un matériau conducteur portée à un potentiel de référence.

3. Dispositif d'affichage selon l'une quelconque des revendications 1 et 2, caractérisé en ce que i' est égal à i + 1.

4. Dispositif d'affichage selon l'une quelconque des revendications 1 à 3, caractérisé en ce que le matériau d'affichage est un film de cristal liquide, les signaux d'excitation étant des tensions électriques.

5. Dispositif d'affichage selon l'une quelconque des revendications 2 à 4, caractérisé en ce que les interrupteurs sont des transistors à effet de champ, chaque transistor $I_l$ associé à une électrode $E_l$ d'un paquet $P_{ii'j}$ étant relié par sa grille au conducteur résistif $R_{ii'j}$ correspondant, par une deuxième borne au conducteur colonne $C_j$ correspondant et par une troisième borne à ladite électrode $E_l$, avec l entier tel que $1 \leq l \leq k$.

6. Dispositif d'affichage selon l'une quelconque des revendications 1 à 5, caractérisé en ce que les conducteurs résistifs comprennent des résistances en série.

7. Dispositif d'affichage selon l'une quelconque des revendications 1 à 6, caractérisé en ce que la valeur résistive de chaque conducteur résistif du dispositif est identique.

8. Dispositif d'affichage selon l'une quelconque des revendications 1 à 7, caractérisé en ce que la valeur résistive d'un conducteur résistif $R_{ii'j}$, relié par k interrupteurs $I_1$,..., $I_k$ aux points images $A_{ii'j1}$,... $A_{ii'jk}$ d'un paquet d'éléments, entre le conducteur ligne $L_i$ et l'interrupteur $I_1$, entre le conducteur ligne $L_{i'}$ et l'interrupteur $I_k$ et entre les différents interrupteurs $I_1$ et $I_2$, $I_2$ et $I_3$,... $I_{k-1}$ et $I_k$ auxquels il est relié, est identique, avec i, i', j et k entiers tels que $i \neq i'$, $1 \leq i \leq n$, $1 \leq i' \leq n$ et $1 \leq j \leq m$.

9. Procédé de commande d'un dispositif d'affichage selon l'une quelconque des revendications 1 à 8, caractérisé en ce que pour commander la propriété optique du matériau d'affichage aux points images $A_{ii'j1}$, ..., $A_{ii'jk}$, d'un paquet d'éléments, avec i, i',j et k entiers tels que $i \neq i'$, $1 \leq i \leq n$, $1 \leq i' \leq n$ et $i \leq j \leq m$, on applique pendant un temps $T_s = T/(n-1)$ divisé en k fractions de temps $t_l$ sur les conducteurs lignes $L_i$ et $L_{i'}$ respectivement des signaux d'excitation $V_i$ et $V_{i'}$ entraînant à chaque fraction de temps $t_l$, la fermeture d'au moins un des interrupteurs $I_1$, ..., $I_k$ associés auxdits points images de façon à ce que chacun desdits interrupteurs soit fermé sur au moins une fraction de temps $t_l$, avec l entier tel que $1 \leq l \leq k$, lesdits interrupteurs étant reliés au conducteur résistif $R_{ii'j}$ et sur les autres conducteurs lignes des signaux d'excitation provoquant l'ouverture des interrupteurs associés auxdits autres conducteurs lignes, T étant la période d'adressage d'un point image.

10. Procédé de commande selon la revendication 9, caractérisé en ce que l'on applique sur les conducteurs lignes $L_i$ et $L_{i'}$ respectivement des signaux d'excitation $V_i$ et $V_{i'}$, entraînant à chaque fraction de temps $t_l$ du temps $T_s$ d'adressage des points images $A_{ii'j1}$,... $A_{ii'jk}$, avec l entier tel que $1 \leq l \leq k$, l'ouverture d'un des interrupteurs associés auxdits points images, fermés au temps $t_{l-1}$, les autres interrupteurs conservant leur état, tous les interrupteurs associés auxdits points images étant fermés au temps $t_1$.

11. Procédé de commande selon l'une quelconque des revendications 9 et 10, caractérisé en ce qu'on applique aux conducteurs lignes $L_i$ et $L_{i'}$ respectivement des signaux d'excitation $V_i$ et $V_{i'}$ entraînant à chaque fraction de temps $t_l$ du temps $T_s$ d'adressage des points images $A_{ii'j1}$,... $A_{ii'jk}$, la fermeture des interrupteurs $I_1$, ..., $I_u$ associés auxdits points images, avec u entier tel que $u = k-(l-1)$ et l'ouverture des autres interrupteurs associés auxdits points images.

12. Procédé de commande selon l'une quelconque des revendications 9 et 10, caractérisé en ce qu'on applique aux conducteurs lignes $L_i$ et $L_{i'}$ respectivement des signaux d'excitation $V_i$ et $V_{i'}$ entraînant à chaque fraction de temps $t_l$ du

temps $T_s$ d'adressage des points images $A_{i-i'j1}$,... $A_{ii'jk}$, la fermeture des interrupteurs $I_l$, ..., $I_k$ associés auxdits points images et l'ouverture des autres interrupteurs associés auxdits points images.

13. Procédé de commande selon la revendication 9, caractérisé en ce que k étant égal à trois, on applique sur les conducteurs lignes $L_i$ et $L_{i'}$ respectivement des signaux d'excitation $V_i$ et $V_{i'}$ entraînant au temps $t_1$ la fermeture des interrupteurs $I_1$, $I_2$ et $I_3$, au temps $t_2$, la fermeture de l'interrupteur $I_1$ et l'ouverture des interrupteurs $I_2$, $I_3$ et au temps $t_3$, la fermeture de l'interrupteur $I_3$ et l'ouverture des interrupteurs $I_1$, $I_2$, les temps $t_1$, $t_2$, $t_3$ étant les trois fractions de temps du temps $T_s$ d'adressage des points images $A_{ii'j1}$, $A_{ii'j2}$, $A_{ii'j3}$.

0268522

FIG. 1a

FIG. 1b

FIG. 2

0268522

FIG. 3

0268522

FIG. 4

0268522

FIG. 5

0268522

FIG. 6

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A,D | EP-A-0 145 520 (COMMISSARIAT A L'ENERGIE ATOMIQUE) * Page 2, lignes 16-32; figure 1 * & FR-A-2 553 218 --- | 1-5 | G 02 F 1/133 G 09 G 3/36 |
| A | US-A-4 470 060 (S. YAMAZAKI) * Colonne 1, lignes 35-55; colonne 11, lignes 19-31; figures 14-17 * --- | 1,3-5 | |
| A | EP-A-0 075 651 (INTERNATIONAL BUSINESS MACHINES) * Revendication 1; figure 1 * --- | 1,4,5 | |
| A | PATENT ABSTRACTS OF JAPAN, vol. 9, no. 129 (P-361)[1852], 5 juin 1985; & JP-A-60 14 219 (CANON K.K.) 24-01-1985 ----- | 1,4 | |

DOMAINES TECHNIQUES RECHERCHES (Int. Cl.4)

G 02 F 1/00
G 09 G 3/36

Le présent rapport a été établi pour toutes les revendications

| Lieu de la recherche | Date d'achèvement de la recherche | Examinateur |
|---|---|---|
| LA HAYE | 10-02-1988 | DELPORTE B.P.M. |